Europäisches Patentamt

European Patent Office

Office européen des brevets

(19)

(11) Publication number: **0 059 318**
**A1**

(12) **EUROPEAN PATENT APPLICATION**

(21) Application number: **82100580.8**

(22) Date of filing: **28.01.82**

(51) Int. Cl.³: **G 09 B 5/06**
**G 10 L 1/00, G 06 K 19/08**

(30) Priority: **03.03.81 US 240674**
**05.03.81 US 240675**

(43) Date of publication of application:
**08.09.82 Bulletin 82/36**

(84) Designated Contracting States:
**DE FR GB NL**

(71) Applicant: **TEXAS INSTRUMENTS INCORPORATED**
**13500 North Central Expressway**
**Dallas Texas 75265(US)**

(72) Inventor: **Barnes, Richard H.**
**8510 Louisville Drive**
**Lubbock Texas(US)**

(72) Inventor: **Fintel, James S.**
**2303 A 76th Street**
**Lubbock Texas 79423(US)**

(72) Inventor: **Herbert, Brian K.**
**6627 Indian Falls**
**Missouri City Texas 77489(US)**

(72) Inventor: **Fernandez, Jose A.**
**5520 58th Street Apartment 124**
**Lubbock Texas 79414(US)**

(74) Representative: **Leiser, Gottfried, Dipl.-Ing. et al,**
**Patentanwälte Prinz, Bunke & Partner Ernsberger**
**Strasse 19**
**D-8000 München 60(DE)**

(54) Bar code reader to speech synthesizer system.

(57) A bar code reader (17) reads allophonic code from a bar code format into a speech producing system (11, 12, 13, 14, 15) to provide speech corresponding to the allophonic code. A bar code format includes a synchronization bar, followed by a barless space, one half the width of the synchronization bar. The barless one-half space is followed by a plurality of data bar spaces, each equal in width to the synchronization space. By counting the time taken to traverse the synchronization space, and by then immediately thereafter counting the counter down to zero, the mid-point of the first data bar space is sampled because of the intervening one-half width barless space. Following the last data bar space, is a full barless space to provide time for initialization to read the next set of bars. In this preferred embodiment, allophonic code is read into a speech producing system (11, 12, 13, 14, 15) whose controller (11) controls the operation of the optical reader (17). Also in this preferred embodiment, the bars are printed over or near associated text (18) and are transparent and reactant to infrared.

Fig.1

## BACKGROUND OF THE INVENTION

Field of the Invention:

This invention relates to a bar code reader to speech system and more particularly to a system wherein the bar code is of a novel format and located proximate associated text.

In today's code reader systems, coded data is stored by printing a series of black vertical bars of varying widths on a white background. An optical sensor can sense the difference between the presence or absence of a bar, and can determine the width of the bar when one is sensed. Problems exist in the current systems, though, in that they rely on a transition from black to white to recognize data. This requires the surface containing the data to be clean and dirt-free, and have no extraneous marks or spots of any type. Invalid data can result if these conditions are allowed to exist. In addition, the printing process must be of high quality in order to insure constant results when data is read. Uniformity of darkness of bar codes is very important so that noise and false data impulses may be avoided. In the prior art, such coding has been associated with printed text by locating the visible bar code adjacent the associated text. The user scans the visible code with a sensor to obtain a manifestation of the code, representing the associated text. Upon the reading of the bar code by the sensor, the signals generated thereby may be converted into synthesized speech. This visible bar code, however, is distracting to the user, and the pattern thereof requires much space relative to the printed text.

It is an object of the present invention to provide a means for storage of coded data correlated with text material.

It is also an object of the present invention to provide a storage means for coded data not subject to the problems of extraneous marks and dirt causing invalid data to be generated.

A further object of the invention is to provide data storage not requiring pronounced transitions of light reflection magnitude for data retrieval.

Another object of this invention is to provide speech from bar code associated with printed text. Another object of this invention is to provide speech from transparent bar code printed over text. Still another object of this invention is to provide bar code associated with text, the bar code being configured to permit sampling in the center of each data bar space.

A further object of this invention is to provide a bar code reader whose output is synthesizing speech by an LPC speech synthesizer.

These and other objects will be made evident in the detailed description that follows.

SUMMARY OF THE INVENTION

One purpose of the disclosed invention is to provide a means for printed data storage that does not interfere with associated printed text. In a preferred embodiment, the coded data is printed with transparent ink, allowing the data to be located with preference to system considerations. The coded data is adapted to be sensed by a hand-held wand, and ultimately, to activate a speech synthesis circuit. The data read by the user is correlated with a spoken word, and the picture or symbol learning process is greatly aided, without confusion which might be encountered if coded data such as bar code were visible. Preferably, the data representing printed text is located in close proximity to that text to avoid confusion, althouigh this is not a requirement. The "printed text" referred to herein is intended to mean not only printed words, but pictorial and symbolic representations as well. A visual representation of the coded data is also contemplated.

In accordance with the present invention, there is provided a representation of recorded data which is machine readable and associated with user recognizable text. In this aspect of the invention, a user is able to pass a sensor over the coded data and while viewing the associated text, hear the text being spoken or described by a speech synthesis mechanism.

In another aspect of the invention, the user passes a sensor directly over the text material, which has coded data transparently printed directly on it, and a speech synthesizer responds as if the text were read without benefit of machine code, the transparent ink not being visible to the naked eye.

A third aspect of the invention involves the use of transparent ink with an IR absorbent dye. An emitter/sensor mechanism is passed over the transparent code, and where a code bar is not present, the IR energy is reflected and detected by an IR sensor. Where a code bar is present, the IR energy is absorbed by the dye present in the ink, and no reflection is detected.

As provided for in the invention, coded data in a bar code format is printed to correlate with the text which it represents. The code may be located where it would be most convenient to correlate with printed text. In the case where transparent ink is used, a bar code may be printed directly over the text which it represents. In the instance of a transparent ink containing an IR absorbent dye, an IR sensor/emitter device may be employed, eliminating the need for illumination of the code with visible light.

This preferred embodiment is a transparent ink bar code that is responsive to infrared as printed over associated text. An optical reader, known as a wand, is passed over the text and the invisible coded bars to read data from the bar. A speech producing system has a microcontroller which is also employed to control the reading of the bar code. The bar code is arranged in a novel format having a synchronization bar followed by a barless space that is one-half the space width of the synchronization bar, followed by full-width data bar spaces and finally by a barless full space. This format provides for measuring the time required for the wand to traverse the synchronization bar by counting up a counter.

- 4 -

The counter is then counted down traversing the one-half barless space to the approximate center of the first data bar space, providing for sampling the data bar space at or about its center. The counter is reset and counted down again to the next data bar space and so on. The dead time space following the data bars spaces is used for initializing the system to read the next set of data bars.

Allophonic code is read from the data bars, digitized and sent to the speech producing system. The speech producing system decodes the allophonic code and synthesizes it through an LPC synthesizer providing speech that corresponds to the allophonic code read from the bar code.

BRIEF DESCRIPTION OF THE DRAWINGS

Figure 1 is a block diagram of the inventive bar code reader to speech synthesizer system.

Figure 2 is the bar code format.

Figures 3a-3c are a description of the allophone library.

Figure 4 illustrates the synthesizer frame bit content.

Figure 5 illustrates the allophone library bit content.

Figures 6a and 6b form a flow chart describing the control of the speech producing system of the invention.

Figures 7a-7i form a flow chart describing the intonation pattern structuring of the speech producing system.

Figures 8a-8e form a flow chart detailing the control of a microprocessor of the speech producing system over the bar code reader.

Figure 9 is an example of bar code printed directly over the represented text. In a working example, the bars shown on the letters are not visible inasmuch as they are printed with transparent ink.

Figures 10 and 11 show the operation of an infrared (IR) emitter/sensor system used in conjunction with ink containing IR absorbent dyes.

DETAILED DESCRIPTION

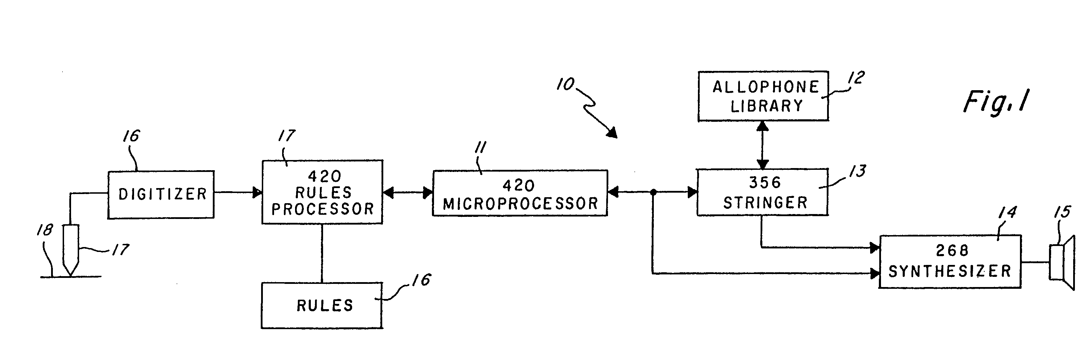

Figure 1 illustrates the speech producing system which is made up of 420 microprocessor 11 having an input to 356 stringer 13 which has an optional allophone library memory 12 and which also has an output to 268 synthesizer 14 whose output is loud speaker 15.

This speech producing system is fully described and claimed in pending U.S. Patent Application U.S. Serial No. 240,693 filed March 5, 1981, entitled "Speech Producing System" and assigned to the assignee of this invention.

Digitizer 16 provides an input to 420 microprocessor 11 and has as its input, the output from wand 17. The combination of wand 17 and digitizer 16 is well known in the prior art. A SKAN-A MATIC CORP type T22043 signal linearizer and wave converter, for example, may be used. Document 18 carries text with transparent bar code overlaying the text to be read by the wand 17.

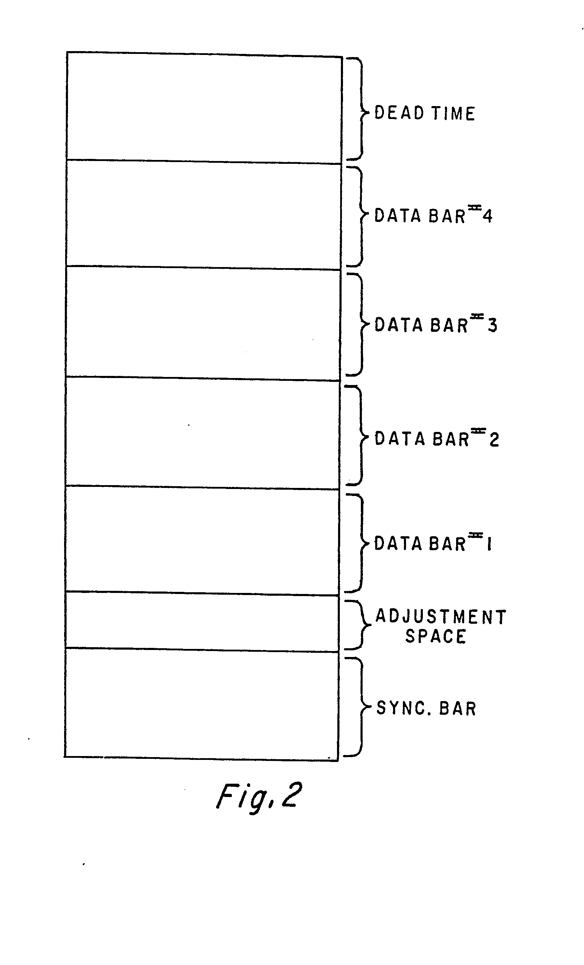

Figure 2 illustrates the format of the bar code of this preferred embodiment. A sync bit is followed by an adjustment space which is one-half the width of the sync bit. Following the adjustment space are four data bits which are full width, that is, the same width as the sync bit. Finally a dead time space follows the data bars and is used for initialization. As indicated above, the sync bar provides a count as the wand 17 is passed over it. The adjustment space, which is one half the width of the sync bar, provides for one half of a subsequent countdown of the counter that counted the sync bar time. That then enables a reading of data bar 1 when the counter reaches 0, thus placing the sampling of data bar 1 at or near the center. The counter is reset and again counted down so that data bar 2 is read at the center and so on.

The bar code may be opaque or transparent. In this preferred embodiment, the transparent bar comprises an infrared absorbent ink in an organic varnish. The infrared absorbent ink is commercially available from, for example, Exciton Chemical Company, identified as IR 132. It is further identified as:

2',2',2-dithenylamino-3',3',4' (methoxy,-4' oxobutyl) naphto d thiozole 2', 3H ethylidene, 1', cyclopenten-1-Yl
ethenyl - 3 (4 methoxy-4-oxobutyl, naphtyl 2', 3', d
ghiazolium);
and empirically as:
$C_{53} H_{48} N_3 O_4 S_2 (ClO_4)$

It should be noted that printed text means words,
pictures, graphic representation and the like.

The 420 microprocessor 11 is a Texas Instruments
Incorporated Type TMC0420 microcomputer described in
detail in Appendix A which includes 26 sheets of
specification and 9 sheets of drawings, enclosed herewith
and incorporated by reference.

The 356 stringer controller 13 is a Texas Instruments
TMC0356, which is described in detail in Appendix B which
comprises 21 specification sheets, and 11 sheets of
drawings, enclosed herewith and incorporated by reference.

Allophone library 12 is a Texas Instruments Type
TMS6100 (TMC350) voice synthesis memory which is ROM
internally organized as 16Kx8 bits.

Synthesizer 14 is fully described in previously
mentioned United States Patent No. 4,209,836. However, in
addition, 286 synthesizer 14 has the facility for
selectively smoothing between allophones and has circuitry
for providing a selection of speech rate which is not part
of this invention.

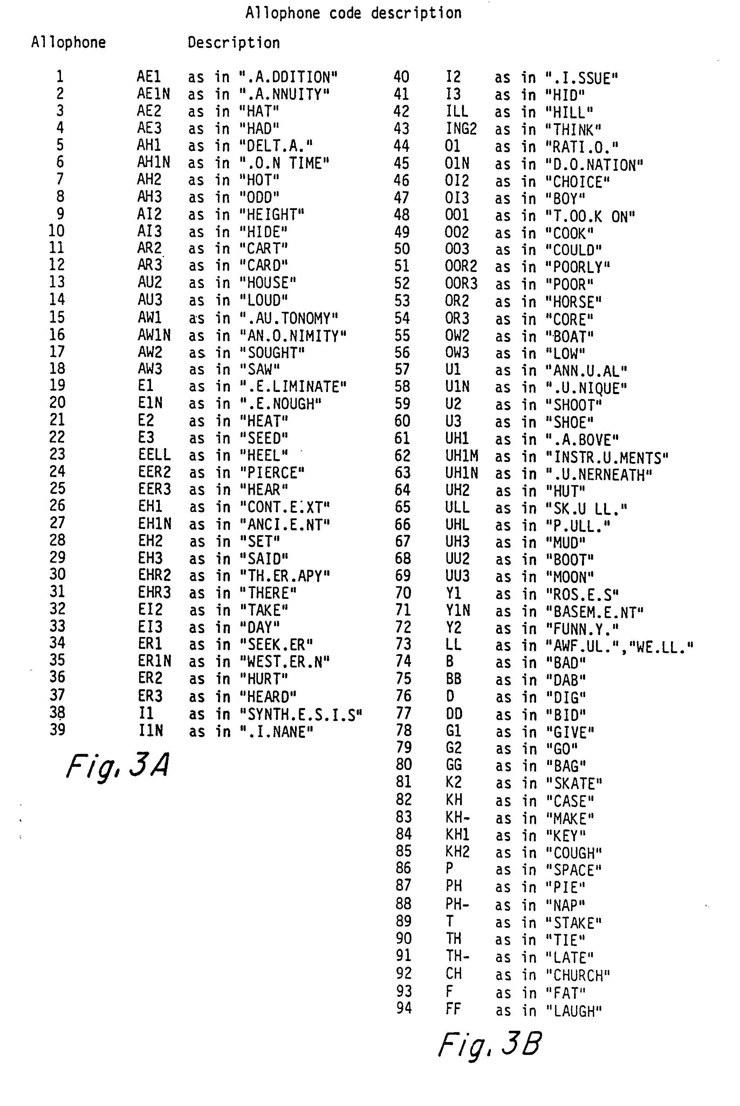

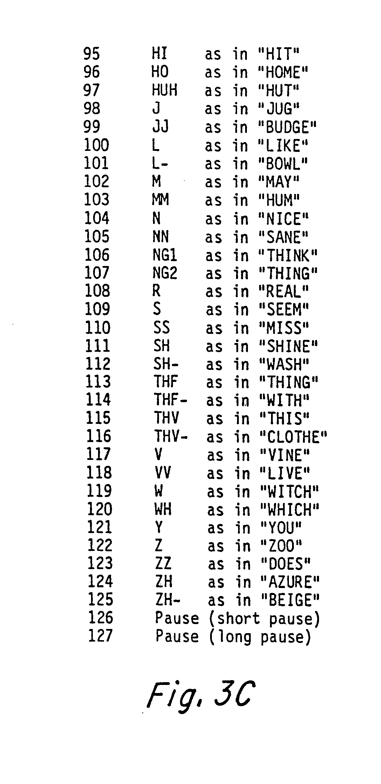

Figures 3a through 3c illustrate the allophones
within the allophone library 12. For example, allophone
18 is coded within ROM 12 as "AW3" which is pronounced as
the "a" in the word "saw". Allophone 80 is set in the ROM
12 as code corresponding to allophone "GG" which is
pronounced as the "g" in the word "bag". Pronunciation is
given for all of the allophones stored in the allophone
library 12.

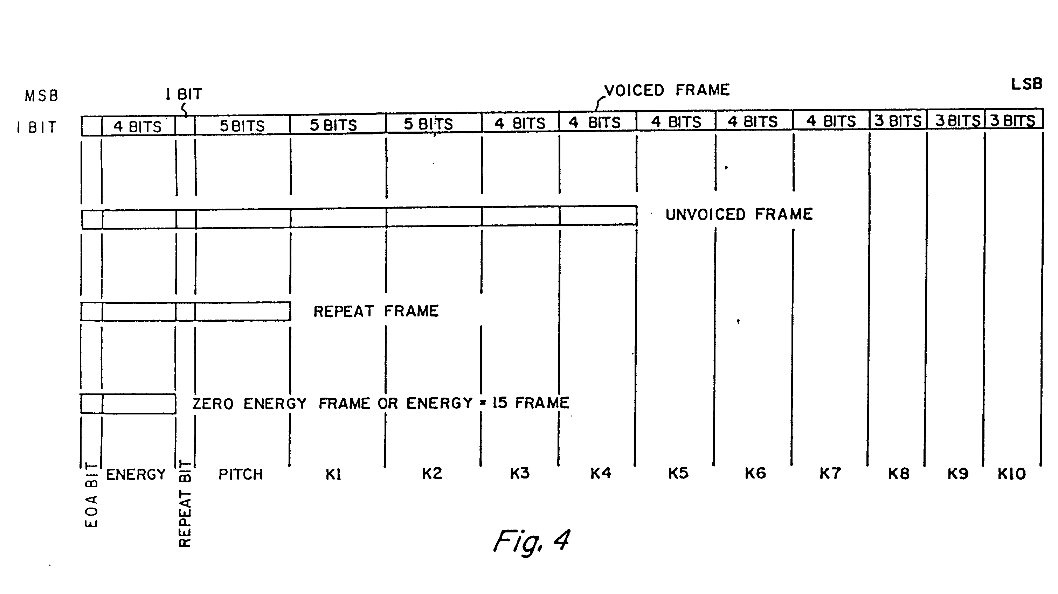

Each allophone is made up of as many as 10 frames,
the frames varying from four bits for a zero energy frame,
to ten bits for a "repeat frame" to 28 bits for a
"unvoiced frame" to 49 bits for a "voice frame". Fig. 4 illustrates this frame structure. A detailed description
is present in previously mentioned United States Patent
No. 4,209,836.

In this preferred embodiment, the number of frames in
a given allophone is determined by a well-known LPC
analysis of a speaker's voice. That is, the analysis
provides the breakdown of the frames required, the energy
for each frame, and the reflection coefficients for each
frame. This information is stored then to represent the
allophone sounds set out in Figs. 3a-3c.

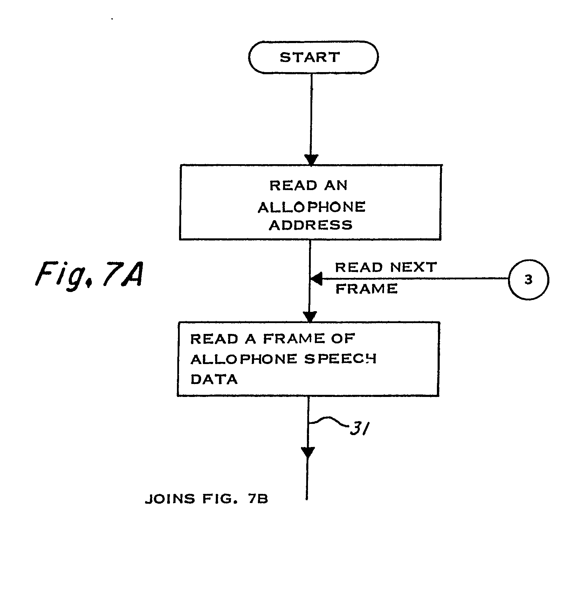

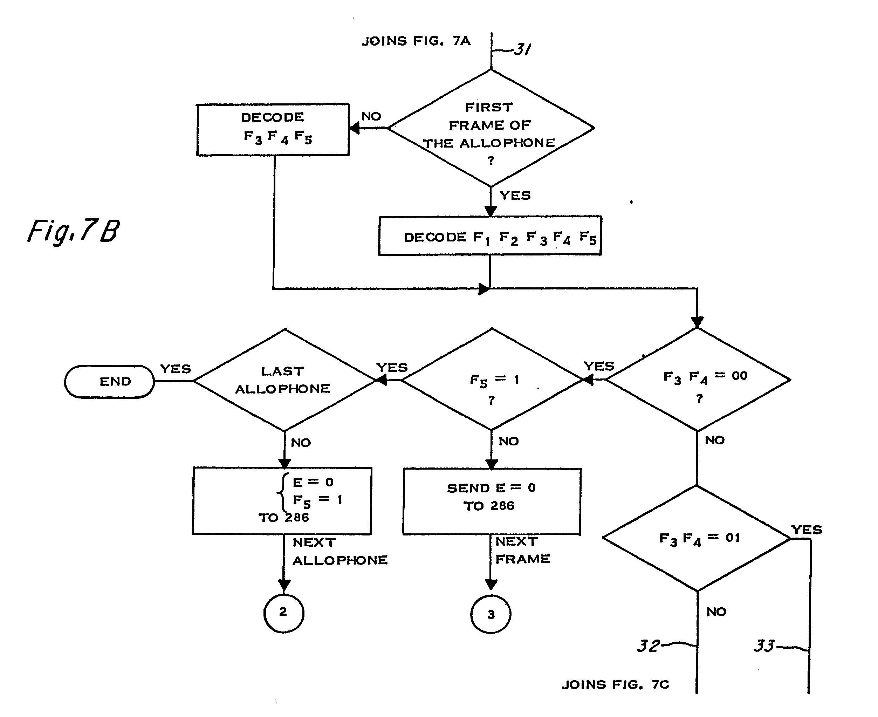

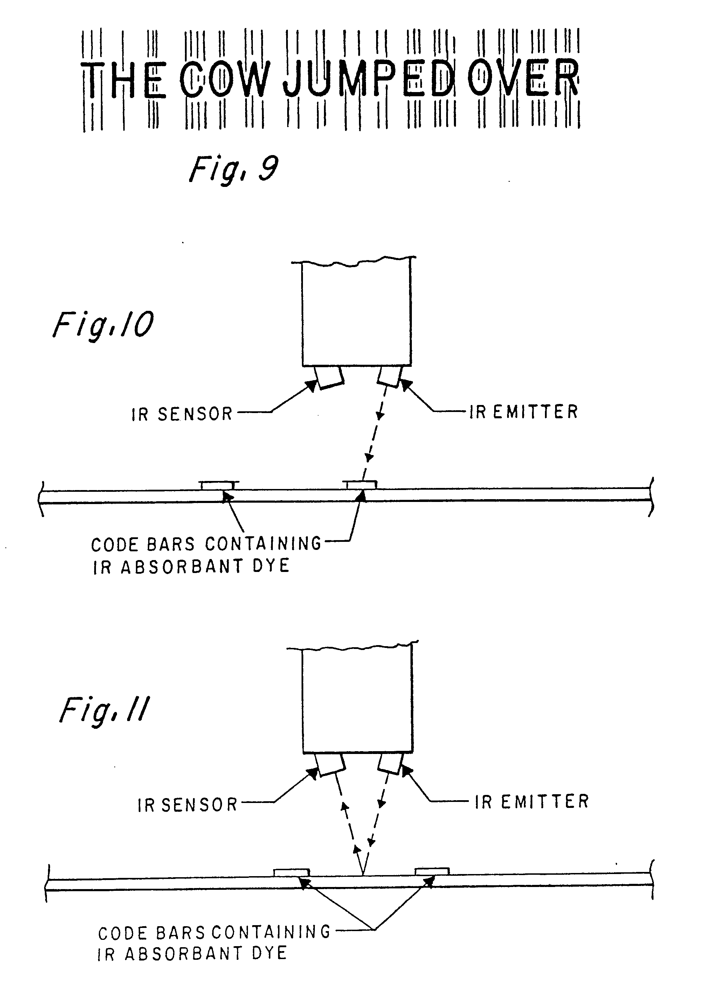

Smoothing between certain allophones is accomplished
by circuitry illustrated in Figs. 7a and 7a (cont'd) of
U.S. Patent No. 4,209,836. In Figs. 7a and 7a (cont'd)
signal $\overline{\text{SLOW D}}$ is applied to parameter counter 513,
which causes a frame width of 25
MS to be slowed to 50 MS. Interpolation (smoothing) is
performed by the circuitry shown in Figs. 9a, 9a (cont'd),
9b, 9b (cont'd) over a 50 MS period when signal $\overline{\text{SLOW D}}$ is
present and over a 25 MS period when signal $\overline{\text{SLOW D}}$ is
absent. In the invention of U.S. Patent No. 4,209,836, a
switch was set to cause slow speech through signal $\overline{\text{SLOW D}}$.
All frames were lengthened in duration.

In the present invention $\overline{\text{SLOW D}}$ is present only when
the last frame in an allophone is indicated by a single
bit in the frame. The actual interpolation (smoothing)
circuitry and its operation is described in detail in U.S.
Patent 4,209,836.

Figure 4 illustrates the bit formation of the
allophone frame received by the 286 synthesizer 14. As
shown, NSB is the end of allophone (EOA) bit. When EOA=1,
it is the last frame in the allophone. When EOA=0, it is
not the last frame in the allophone. Figure 4 illustrates
a total of 50 bits (including EOA) for the voiced frame,
29 bits for the unvoiced frame, 11 bits for the repeat
frame and 5 bits for the zero energy frame energy equal to
15.

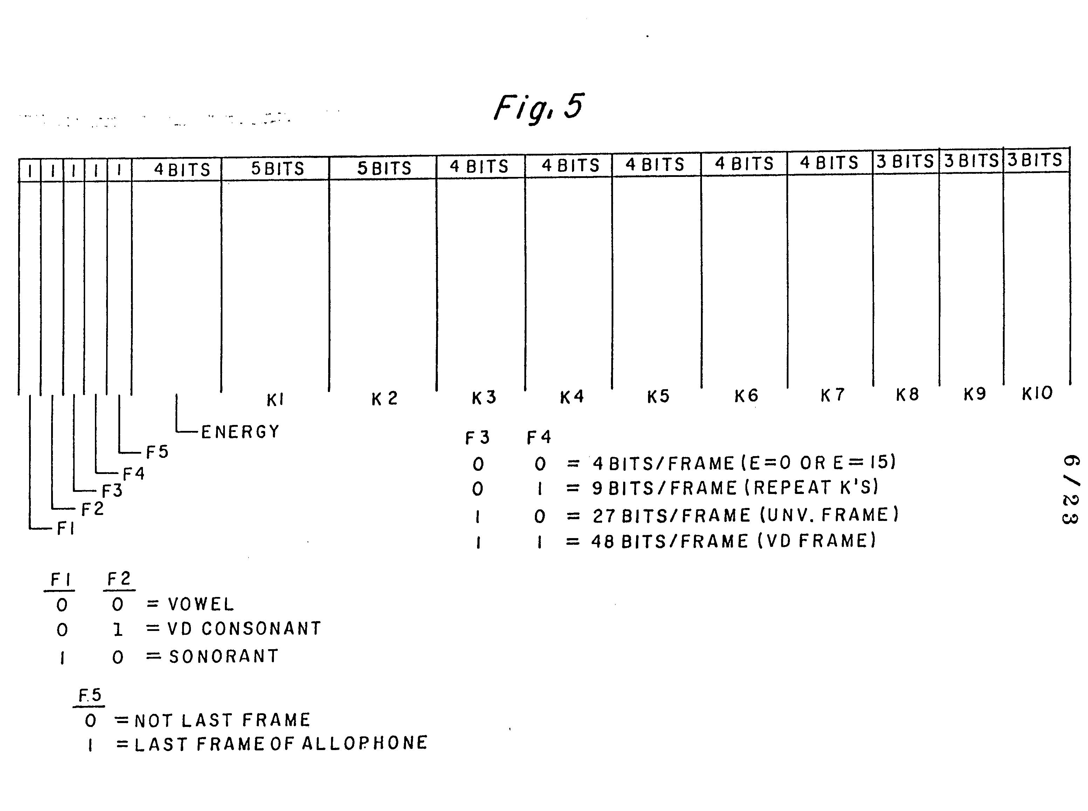

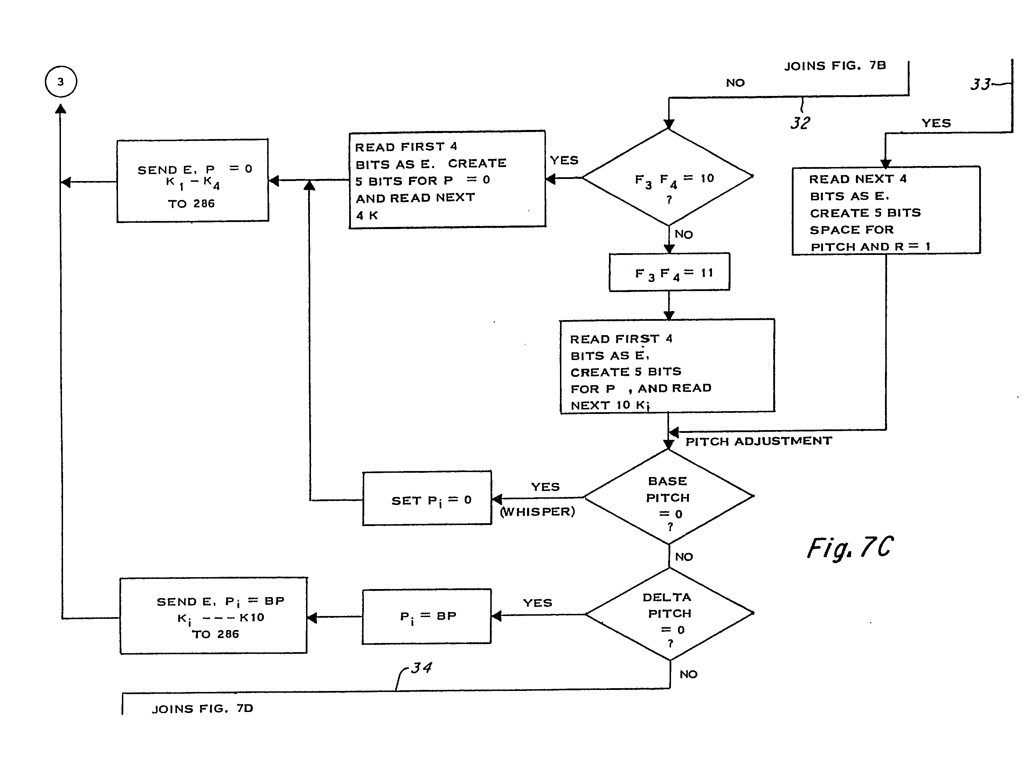

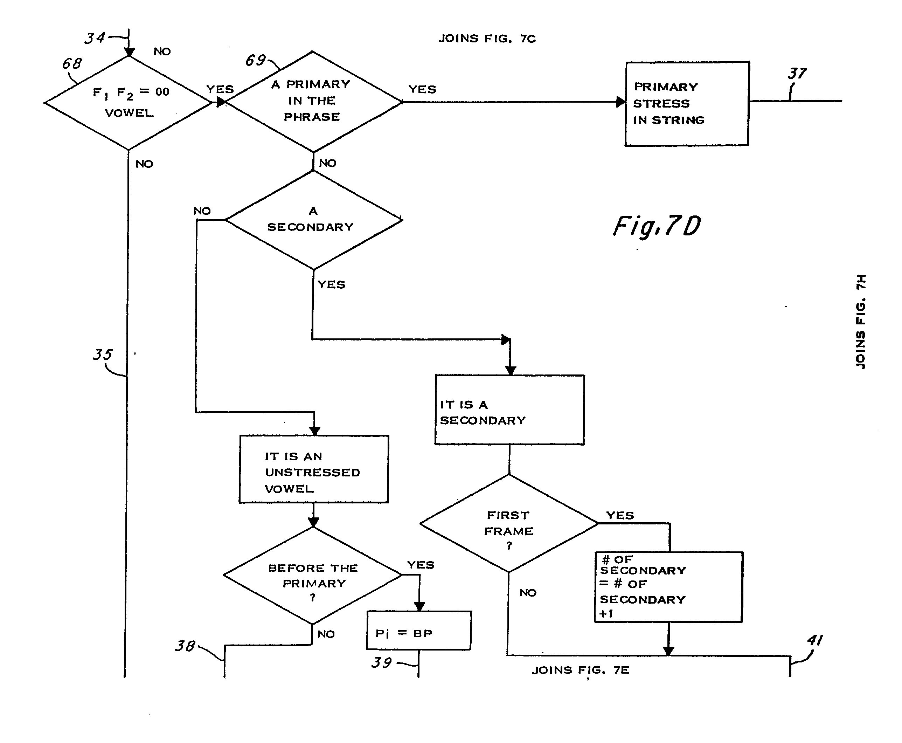

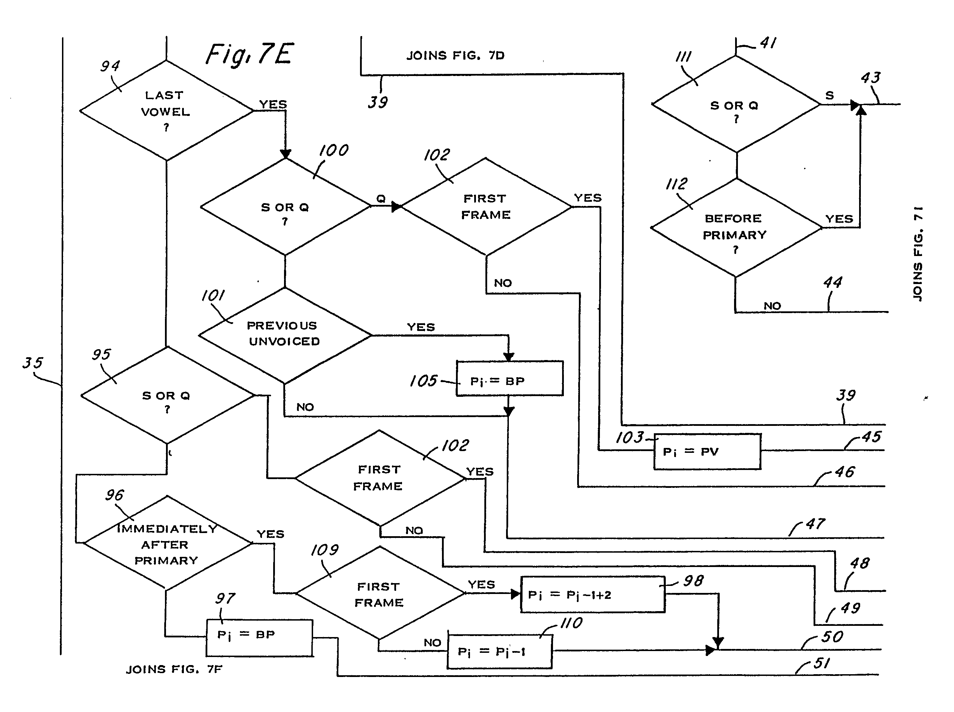

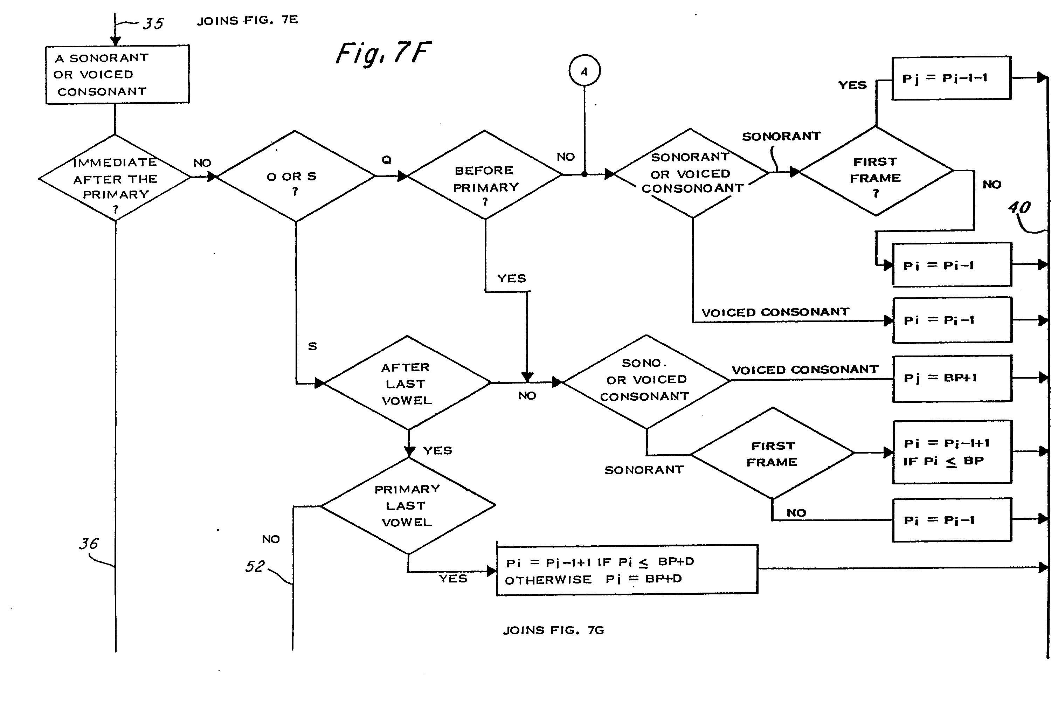

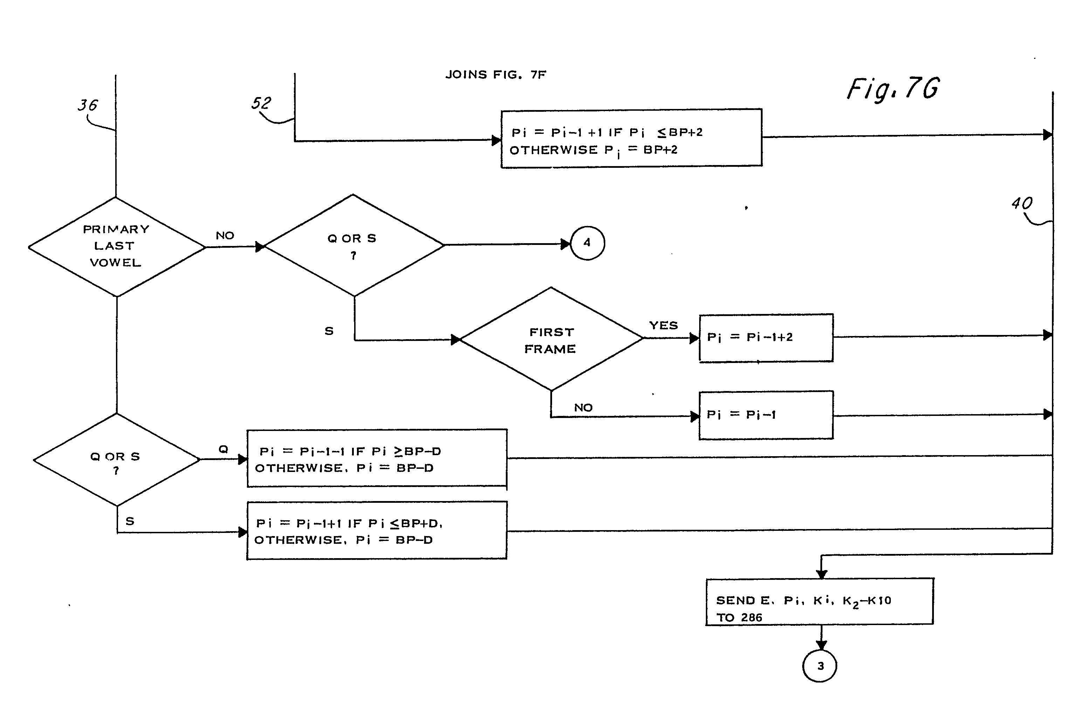

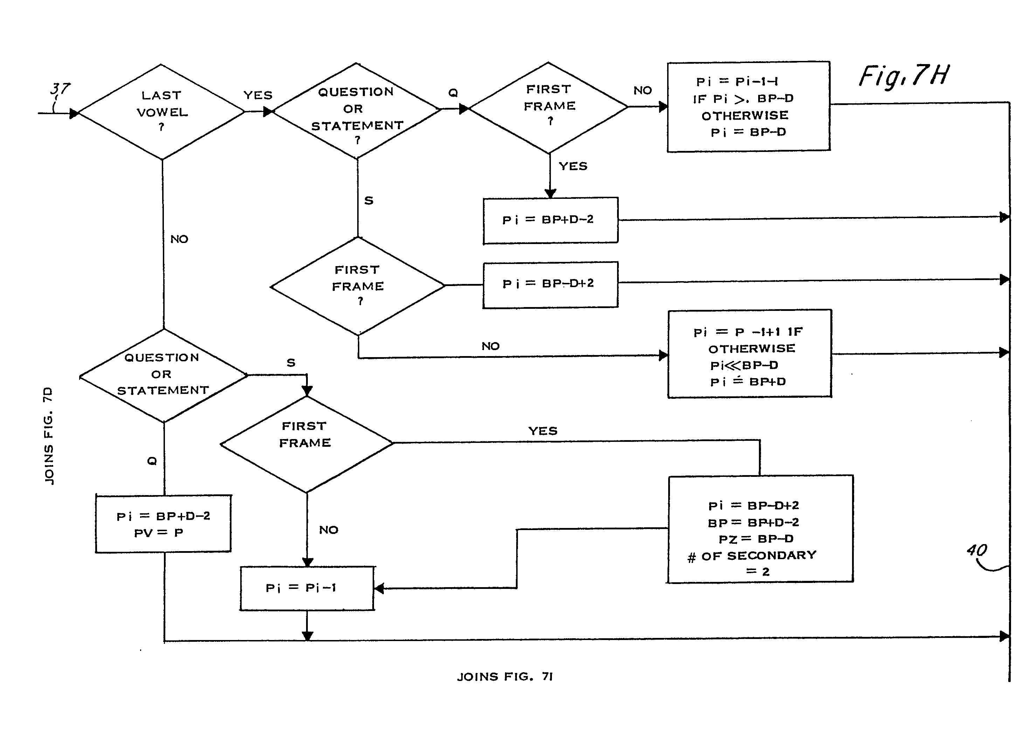

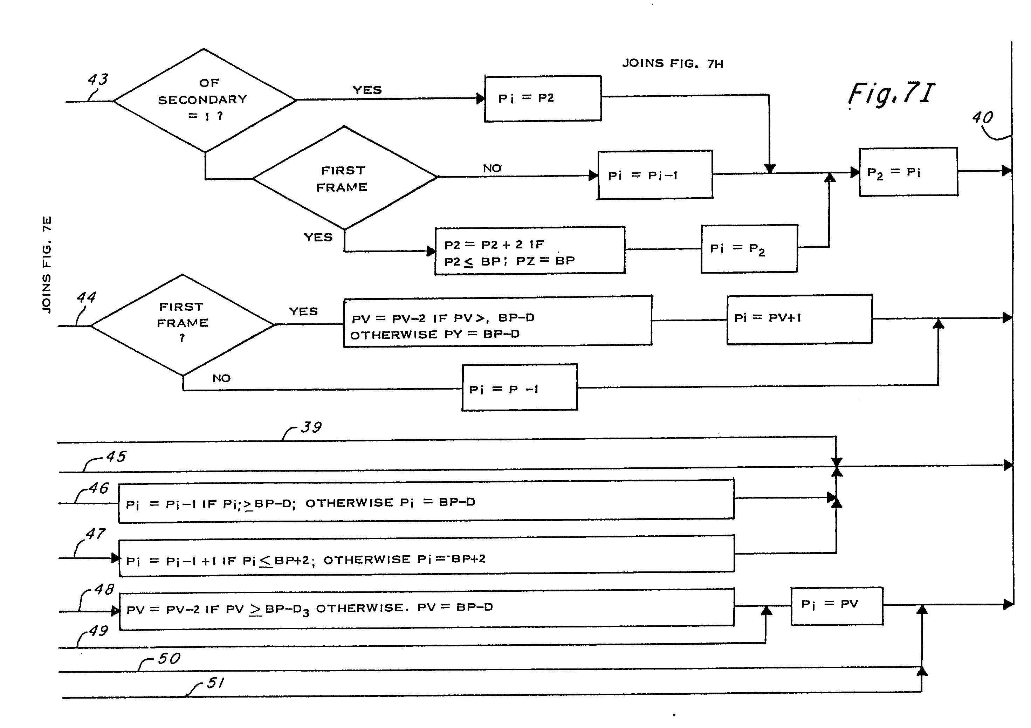

Figure 5 illustrates an allophone frame from the
allophone library 12. F1-F5 are each one bit flags with
F5 being the EOA bit which is transferred to the 286 synthesizer 14. The combination of flags F1 and F2 and the combination of flags F3 and F4 are shown in Fig. 7 and the meaning of those combinations set out.

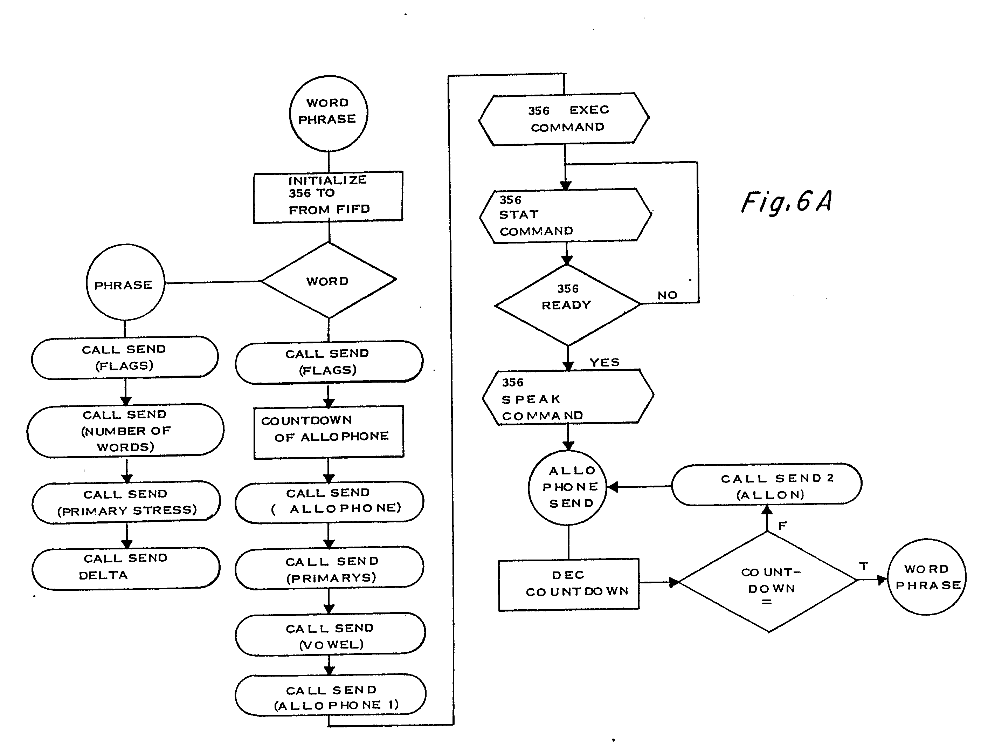

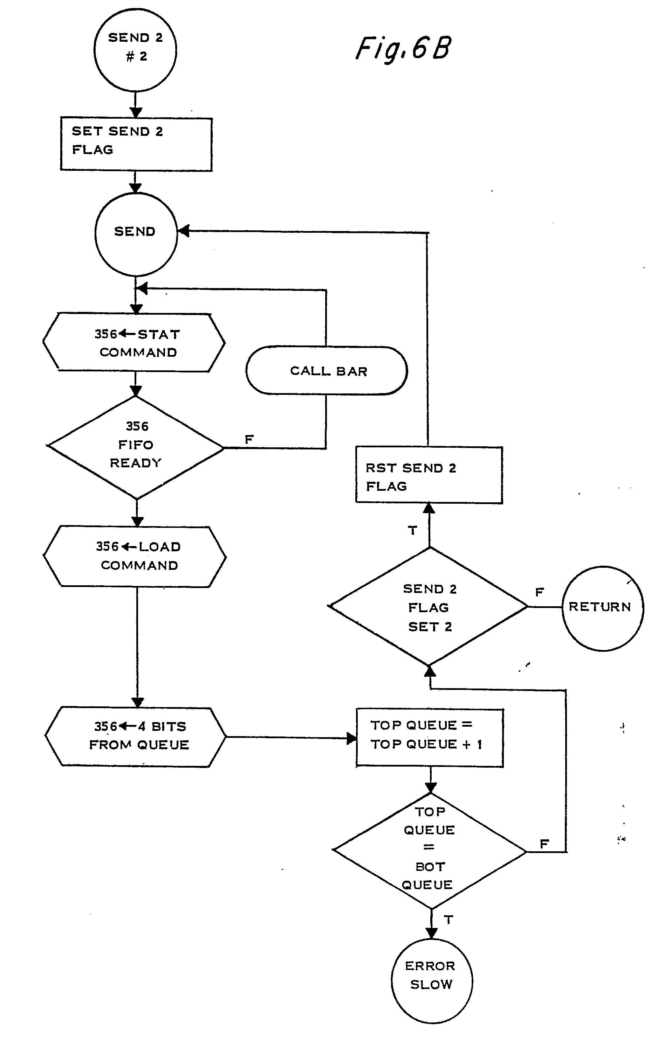

Figures 6a and 6b form a flowchart illustrating the details of control exerted by the 420 microcomputer 11 over, primarily, the 356 stringer 13. Beginning at "word/phrase", the first-in, first-out (FIFO) register of the 356 stringer 13 is initialized to receive the allophonic code from 420 microprocessor 11. Next it is determined whether the incoming information is simply a word or a phrase. It it is simply a word, then the call routine is brought up to send flag information representative of allophones, the primary stress and which vowel is the last in the word. The number of allophones is set in a countdown register and the number of allophones is sent to the 356 stringer 13.

The primary stress to be given is sent, followed by the information as to which vowel is the last one in the word. Finally, a send 2 is called to send the entire 8 bits (7 bits allophone, 1 bit stress flag). It should be noted that the previous send routine involved sensing only 4 bits.

A send 2 flag is set and a status command is sent to the 356 stringer 13. Then, if the 356 FIFO is ready to receive information, the FIFO is loaded.

Four bits are then sent from the 420 microcomputer 11 queue register to the FIFO of the 356 stringer 13. The queue is incremented and checked to determine whether it has been emptied. If it has been emptied, there is an error. If it has not been emptied, then the send 2 flag is interrogated. If it is not set, then the routine returns to the send 2 call mentioned above. If the flag is set, then it is cleared and the next four bits are brought in to go through the same routine as indicated above.

When the return is made, an execute command is sent to the 356 stringer 13 after which a status command is sent. If the 356 stringer 13 is ready, a speak command is given. If it is not ready, the status command is again sent until the stringer 13 is ready. Then the allophone is sent and the countdown register containing the number of allophones is decremented. If the countdown equals zero, the routine is again started at word/phrase. If the dountdown is not equal to zero, then the send 2 routine is again called and the next allophone is brought with the procedure being repeated until the entire word has been completed.

If, a phrase had been sent rather than a word, then and similar to the case of the single word, status flags are sent, and the call routine is sent, indicating first the number of words, then the primary stress,

and the delta pitch. At that point, the routine return to word/phrase and is identical to that set out above.

Figure 7a-7i form a flowchart of the details of the control of the action of the 356 stringer 13 on the allophones. Beginning in Figure 7a the starting point is to "read an allophone address" and then to read a frame of allophone speech data". On path 31 to Figure 7b a decision block inquiring "first frame of the allophone" is reached. If the answer is "yes", then it is necessary to decode the flags F1-F5. If the answer is "no", then it is necessary to only decode flags F3, F4 and F5. As indicated above, flags F1 and F2 determine the nature of the allophone and need not be further decoded. After the decoding, in either case, a decision block is reached where it is necessary to determine whether F3 F4=00. If the answer is "yes" then the energy is 0 and a decision is made as to whether F5=1, indicating the last frame in the allophone. If the answer is yes, then the decision is reached as to whether it is the last allophone. If the answer is "yes", the routine has ended. If F5 is not equal to 1, then E=0 is sent to the 286 synthesizer 14 and the next frame is brought in as indicated on Figure 7a. If F5=1, and it is not the last allophone, then the information =0 and F5=1 is sent to the 286 synthesizer 14 and the next allophone is called starting at the beginning of the routine.

If F3 F4 is not equal to 00, then it is determined whether F3 F4=01, indicating a 9 bit word because a repeat, using the same K parameters, is to follow. If the answer is "no", then on path 32 to Fig. 6c, it is determined whether F3 F4=10, indicating 27 bits for an unvoiced frame. If the answer is "yes", the first four bits are read as energy. Five bits for pitch are created as 0 and the next four bits are read as K1-K4. Then energy and pitch=0 and K1-K4 are sent to the 286 synthesizer 14. If F3 F4/10, then F3 F4=11 indicating a voiced 48 bit frame and the first four bits are read as energy, the next five bits are created as pitch and the ten K parameters are read.

Turning to Fig. 7b, if it was determined that F3 F4=01, then on path 33 into Fig. 7c the next four bits are read as energy, five bits space is created for pitch and repeat (R)=1. At this point, if F3 F4=11 or if F3 F4=01, a pitch adjustment is to be made. The inquiry "base pitch=0?" is made. If the answer is "yes", then the speech is a whisper and pitch is set to 0. At that point, energy and pitch=0 and K1 to K4 is sent to the 286 synthesizer 14. The next frame is brought in as indicated on Fig. 7a.

If the base pitch=0, then a decision is made as to whether the delta pitch=0. If the answer is "yes", then the pitch is made equal to the base pitch. The energy, and pitch equal to the monotone base pitch, and the parameters K1-K10 are sent to the 286 synthesizer 14 and the next frame is brought in.

If the delta pitch=0, then on path 34 into Fig. 7a it is determined whether F1 F2=00, indicating a vowel. If the answer is "yes", then the question "a primary in the phrase" is asked. If the answer is "no" it is asked whether there is a secondary in the phrase. If the answer is "no", then the vowel is unstressed and the question is asked "is this vowel before the primary stress". If the answer is "no", then on path 38 to Fig. 7c, the decision is made as to whether this is the last vowel. If the answer is "no", then the decision is made as to whether it is a statement or a question type phrase. If the answer is that it is a statement, the decision is made to determine whether it is immediately after the primary stress. If the answer is "no", then the pitch is made equal to the base pitch and on path 51 to Fig. 61 it is seen that path 40 returns to Fig. 7g where it is indicated that all parameters are sent to the 286 synthesizer 14 for reading and another frame is brought in. This particular path was chosen because of its simplicity of explanation. The multitude of remaining paths shown illustrate in great detail the selection of pitch at the required points.

The assignment of decending or assending base pitch is shown in Figure 7h. Path 37 from Fig. 7d indicates that there is a primary stress in the particular string and if it is the last vowel, then it is determined whether the phrase is a question or statement. If it is a question, it is determined whether it is the first frame of the allophone. If the answer is "yes", then pitch is assigned as indicated equal to BP+D-2. If it is a statement, and it is the first frame, then pitch is assigned as BP-D+2. This assignment of pitch is set out in Section 4.6 of appendix B.

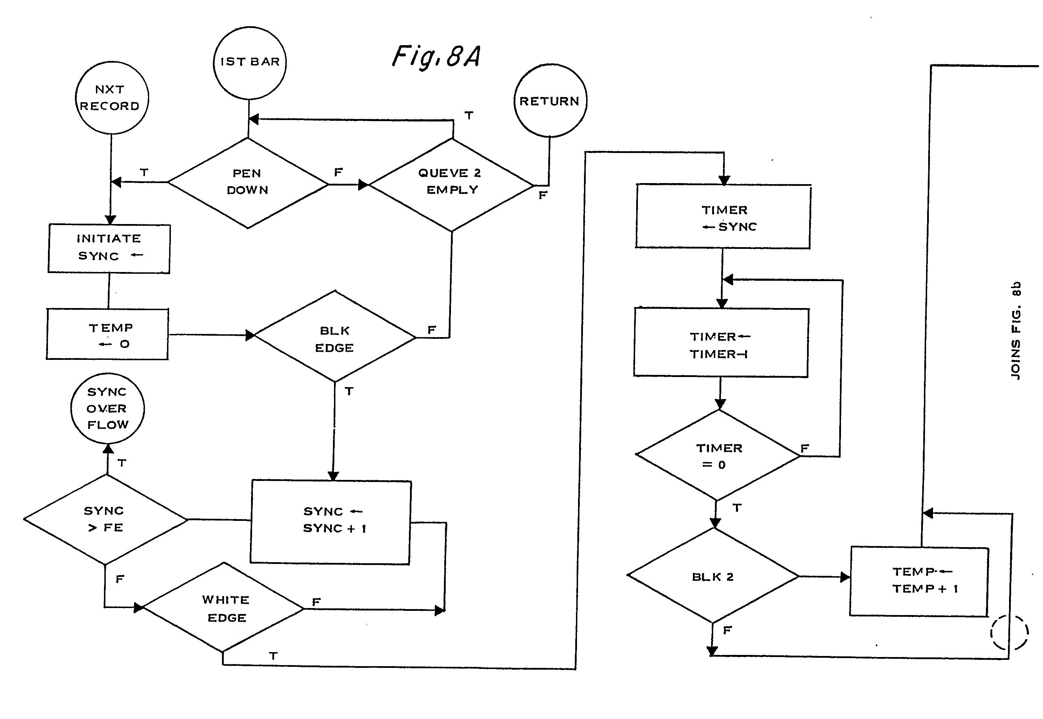

Figures 8a-8-e form a flow chart illustrating in detail the control by the 420 processor 11 over digitizer 16 and wand 17. A first time bar is an input and it then determines whether the pen (wand) is down. If it is, then the sync is initialized and temporary storage is initialized. The next record also is subject to these operations. If the pen is not down, then queue 2, which is the speaking queue is observed and if it is empty, then a routine returns to the call bar of Figure 6b. If queue 2 is empty, it is determined again whether the pen is down to get data.

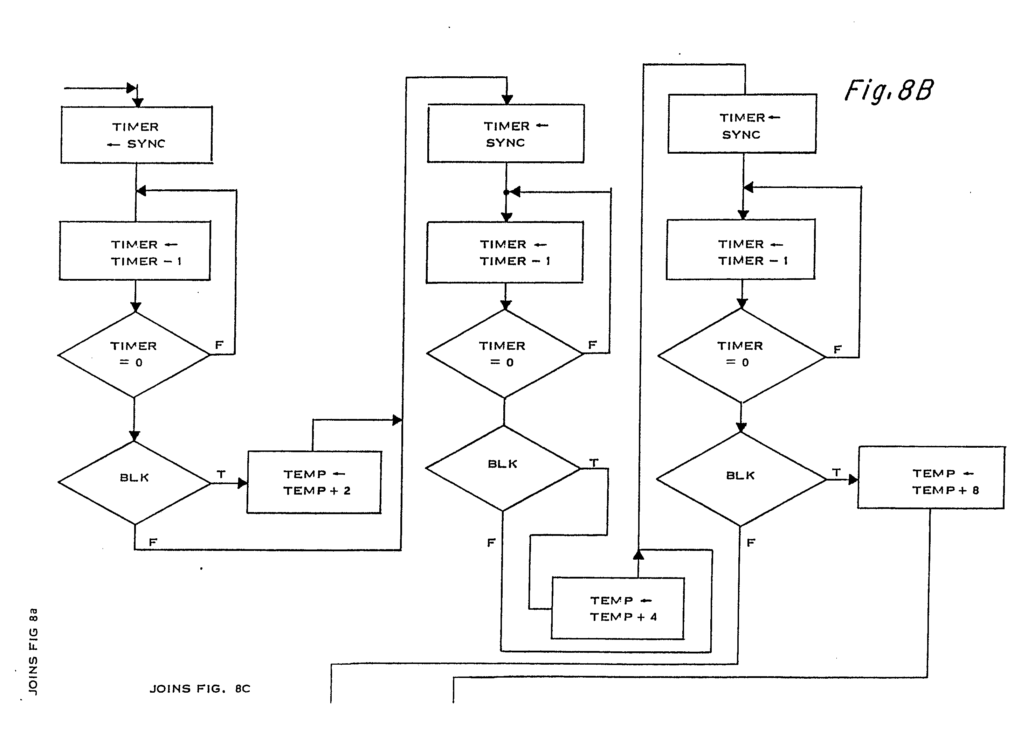

Having initialized the temporary storage, the edge of th synchronization bar is detected and it is asked whether there is a "black edge". If the answer is false, then the queue 2 empty query is again made. If it is true, then sync is incremented. The question is asked whether the sync is larger than FE (hexidecimal). If it is, it indicates an alarm condition, that the operator moved the wand too slowly. If it is false, then a white edge is detected. If it is not detected, the sync is again incremented until the white edge is detected at which time the contents of the sync goes to the timer (counter). The timer is decremented and the question is asked whether the timer is equal zero. If the timer is not equal to zero, the timer is again decremented. If the timer is equal to zero, the question is asked whether there is a black surface. This, of course, indicates the presence of a bar and if it is true, the temporary register is incremented. In either event, the sync is loaded into the timer. The timer is again decremented and a wait is imposed until the timer equals zero. Figure 8b illustrates exactly the same procedures for three bars or the four bar code, the first bar having been discussed with respect to Figure 8a.

The temporary file is then pushed on the bottom of queue 1, the organizational queue. Then a count record flag is interrogated. If it is set, then the phrase flag is set. If it is not set, the field count equals zero is interrogated. If it is not, then fields are brought in. If it is, then the count record flag is set and interrogation is made as to whether the control data least significant bit is set. If it is, then the CTL flag is set. If it is not, it is determined whether there is a word and if there is, the word flag is set. If there is not, the phrase flag is set.

If the phrase flag is set, then a check sum is made equal to the contents of the temporary register. The field count is set equal to three and the check sum from queue 1 is removed.

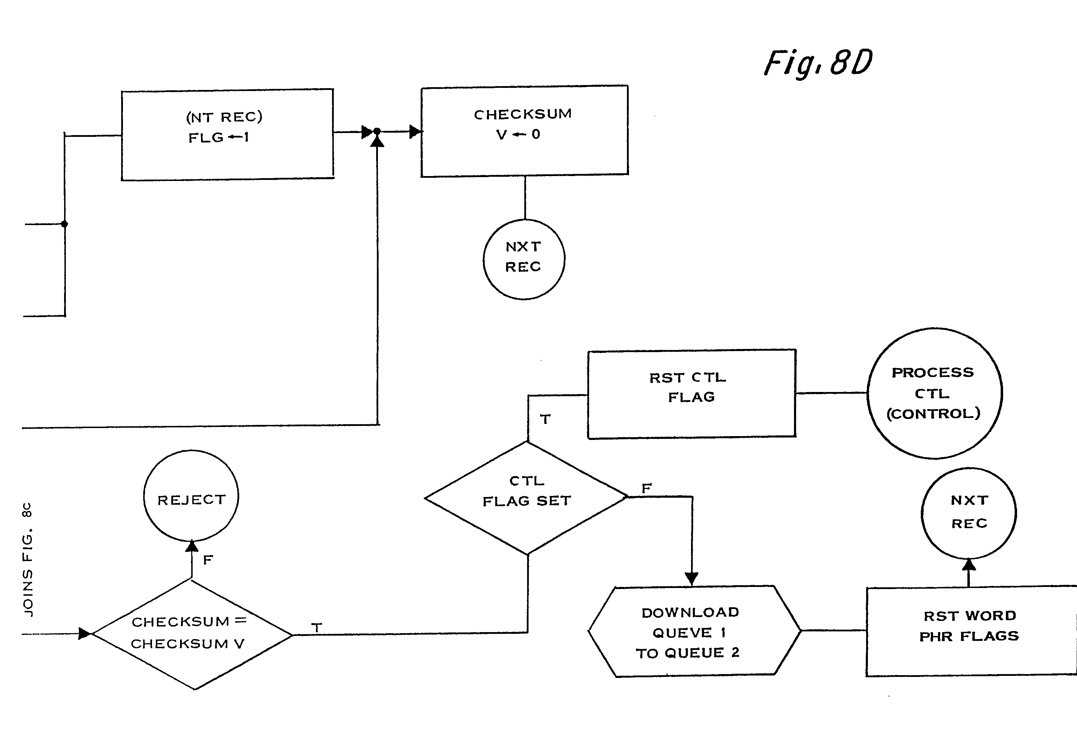

Figure 8d illustrates that the count record 1 flag is incremented because of the control data or the word questions being true. The check sum V is initialized to zero from the count rec 1 flag having been initialized or from the phrase flag having been set. The next record is then received.

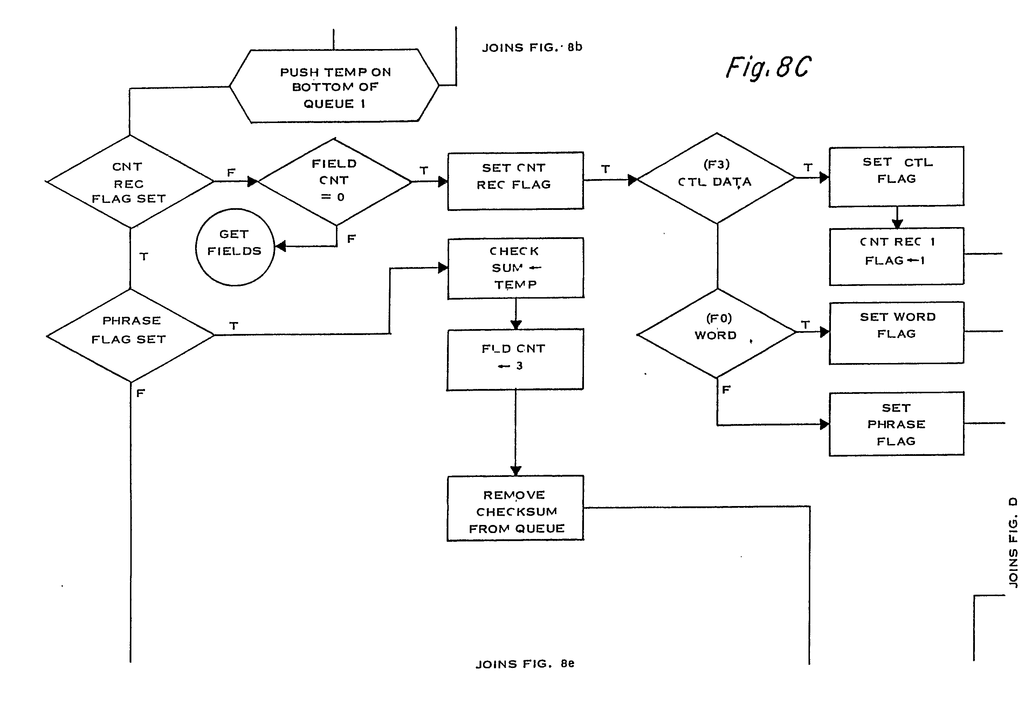

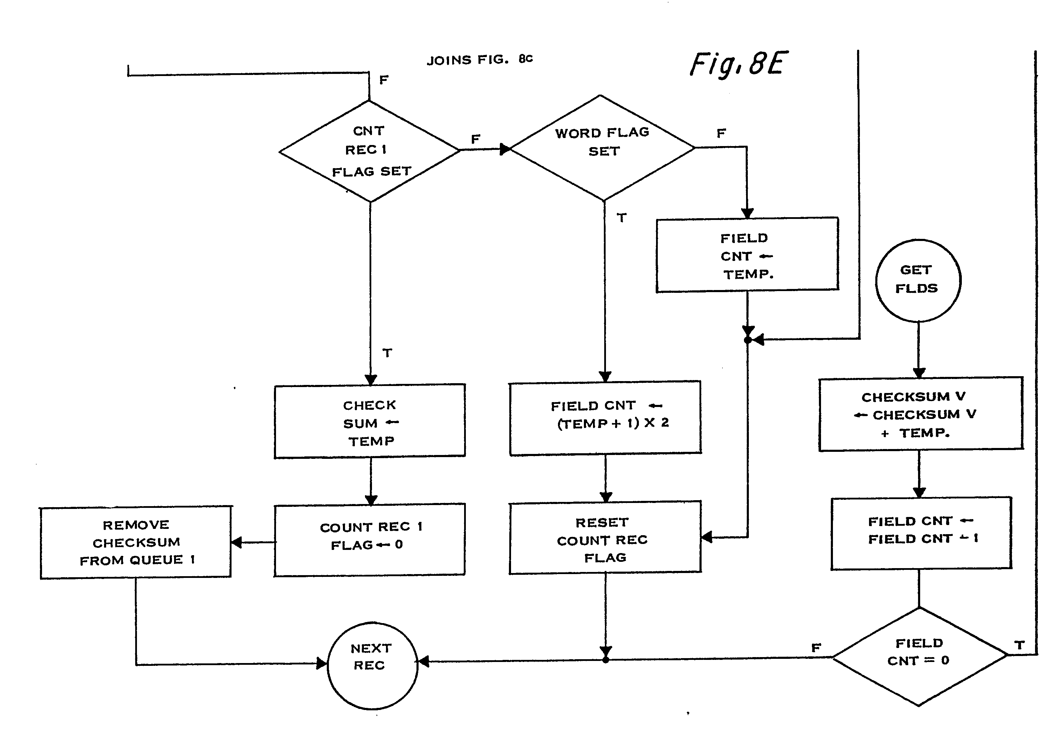

Figure 8e illustrates interrogating count record 1 to see if that flag has been set after having determined that the phrase flag was not set in Figure 8c. If the answer
is true, then the check sum is made equal to the contents
of the temporary storage. The count rec 1 flag is set to
zero and the check sum is removed from queue 1, with the
next record then being sought. If the count record 1 flag
is not set, then the word flag is looked at and if it is
set, then the field count is made equal to the temp plus 1
times 2 (to indicate how many 4 bit nibbles) and the count
rec flag is reset. The next record is then called forth.
If the word flag is not set, then the field count is made
equal to the temporary register and the count rec flag is
reset. The count flag rec is also reset when the check
sum is removed from queue 1 as indicated on Figure 8c.

The get fields input from Figure 8c is brought in
and check sum V is made equal to check sum V plus the
temporary count. The field count is incremented and then
the field count is interrogated to determine if it is
zero. If it is zero, then check sum V is interrogated to
see if it is equal to check sum. If it is not, there is a
fault or reject. If it is, the CTL flag is interrogated.
If it is set, it is then reset permitting a process CTL
(control) input from outside devices such as the keyboard
of pending U.S. Patent Application Serial No. 240,692
filed March 5, 1981 entitled "Keyboard Input From Graphic
Symbols", assigned to the assignee of this invention. If
it is not, the assembly queue 1 is down loaded to the
speaking queue 2. Then the word phrase flags are reset
and the next record is called forth.

## MODE OF OPERATION

The operation of this invention is primarily shown in
Figures 5 and 6a-6i. In broad terms, however, the speech
producing system of this invention accepts allophonic code
through the 420 microprocessor 11 shown in Figure 1. The
code received is related to an address in the allophone
library 12. The code is sent by the 420 microprocessor 11
to 356 stringer 13 where the address is read and the
allophone is brought out when handled as indicated in
Figures 6a-6i. The basic control by the 420 microprocessor 11 in causing the action by the 356 stringer 13 is shown in Fig. 5. The 286 synthesizer 14 receives the allophone parameters from the 356 stringer 13 and forms an analog signal representative of the allophone to the speaker 15 which then provides speech-like sound.

Figure 9 is a drawing of a preferred embodiment of a document having a printed text and bar code data associated therewith in accordance with the present invention. The printed text is put on the paper in the normal manner, and then bar code data is printed directly over the text using an ink which is transparent and containing an IR absorbent dye as previously described. The bar code data may be a direct representation of the text beneath it, or it may be commands, information about the text, or other appropriate data. The infrared absorbent ink is transparent to visible light, but highly absorbent of energy in the infrared frequency range. With this property, a sensor can detect the presence or absence of a bar code unit. An IR energy source is included in the sensor mechanism to insure that sensing of data is done with reflected energy of sufficient strength to be distinguished from stray IR sources.

Figures 10 and 11 illustrate the principle of a data sensing arrangement using ink containing an IR absorbent dye. The code bars are printed over text. The added thickness of perhaps .0001 inch causes no problem as far as reading the text, and data sensing is accomplished easily with an IR emitter/sensor. The IR energy emitted is focused on an area the size of a bar code unit. If a certain magnitude of reflected IR energy is not detected by the sensor, a bar unit is registered by the circuitry receiving the data. For the case that enough reflected IR is detected, no bar code unit is assumed at that location.

In a preferred embodiment of the invention, text material is printed in a conventional manner on plain paper. After the next printing is complete, the transparent bar code data is printed directly over the text. The ink used to print the bar code data is transparent consisting mostly of varnish, but having an IR absorbent dye which is also transparent. With no bar code visible, the text material is easily read, and when the user desires, a sensor is passed over the text to provide an input to a host speech synthesis system (such as illustrated in Figure 1) which ultimately produces a synthesized spoken version of the text (or other desired information related to the text).

This invention is clearly advantageous over current bar code storage and retrieval systems in several ways. One advantage is that the sensor does not require black-to-white transitions, or changes in the amount of reflected visible light, for an indication of data. Printing is usually done on white paper, the text printed with black ink to produce a good visual contrast.

The present invention avoids the visual contrast requirement by using a different energy wavelength to sense data. This different energy wavelength (infrared) is not affected adversely, as is visible light wavelengths, by smudges, dirt specks, and other foreign materials that absorb or reflect light. A further advantage of the invention is that with no visible bar codes, the user is not distracted or confused by the bar codes themselves. Additionally, the transparency of the bar codes allows them to be made any size necessary to insure reliable data acquisition.

Although the invention has been described with reference to specific embodiments, this description is not meant to be construed in a limiting sense. Various modifications of the disclosed embodiments as well as alternative embodiments of the invention will become apparent to those skilled in the art upon reference to the description of the invention. The manifestation of the detected code, for example, may be visual as well as oral. It is, therefore, contemplated that the appended claims will cover any modification or embodiments that fall within the true scope of the invention.

**0059318**

WHAT IS CLAIMED:

1.  A talking book having at least one page of printed text with a transparent ink bar code affixed proximate the printed text comprising:

(a)  optical reading means for relative motion reading of the bar code, and for providing parameter encoding, coded signals representative of the bar code; and

(b) speech producing means, connected to receive the coded signals and to produce speech-like sounds therefrom.

2.  The talking book of Claim 1 wherein the optical reading means comprises:

(a)  (i)  an optical reading wand, adapted to pass over the bar code; and

(ii)  control means for controlling the operation of the optical reading wand.

3.  The talking book of Claim 2 wherein the coded signals are digital signals.

4.  The talking book of Claim 3 wherein the coded signals comprise allophonic coded signals.

5.  A bar code reader to speech synthesizer having an optical reader adapted to read from a printed document comprising:

(a)  text printed on the document;

(b)  bar code means affixed proximate the printed text and associated therewith, the bar code means comprising a format of bar spaces whereby the bar spaces are sampled approximately at their respective midpoints by the optical reader to provide parameter encoding, coded signals;

(c)  control means for controlling the operation of the optical reader; and

(d)  speech producing means connected to receive the coded signals and to produce speech-like sounds therefrom.

6. The synthesizer of Claim 5 wherein the coded signals comprise allophonic code.

7. The synthesizer of Claim 5 wherein the bar code means format comprises a synchronization bar and the control means comprises a counter for counting the time of the optical reader to pass over the synchronization bar.

8. The synthesizer of Claim 7 wherein the bar code means format further comprises a one half width barless space adjacent the synchronization bar, followed by a plurality of data bar spaces.

9. The synthesizer of Claim 8 wherein the control means includes means for causing the counter to count down to zero, initiating a read command to the optical reader thereby causing a sampling at or near the midpoint of the data bar space and having means for repeating the sampling for all of the plurality of data bar spaces.

10. The synthesizer of Claim 9 wherein the plurality of data bar spaces is followed by a full barless space to provide time for initializing to read the next bar code means format.

11. The synthesizer of Claim 10 wherein the bar code means format comprises four data bar spaces.

12. The synthesizer of Claims 5, 6, 7, 8, 9, 10 or 11 wherein the bar code means comprises transparent ink, responsive to infrared light.

13. A bar code reader to speech synthesizer having an optical reader adapted to read from the printed document comprising:

(a) text printed on the document;

(b) bar code means affixed proximate the printed text and associated therewith, the bar code means comprising a format of bar spaces whereby the bar spaces

0059318

- 18 -

are sampled approximately at their respective midpoints by the optical reader to provide parameter encoding, coded signals, and

(c) speech producing means connected to receive the coded signals and to produce speech-like sounds therefrom, wherein the speech producing means further includes control means for controlling the operation of the optical reader.

14. The synthesizer of Claim 13 wherein the coded signals comprise allophonic code.

15. The synthesizer of Claim 13 wherein the bar code means format comprises a synchronization bar and the control means comprises a counter for counting the elapsed time of the optical reader to pass over the synchronization bar.

16. The synthesizer of Claim 15 wherein the bar code means format further comprises a one half width barless space adjacent the synchronization bar, followed by a plurality of data bar spaces.

17. The synthesizer of Claim 16 wherein the control means includes means to cause the counter to count down to zero, initiating a read command to the optical reader, thereby causing a sampling at or near the midpoint of the data bar space and having means for repeating the sampling for all of the plurality of data bar spaces.

18. The synthesizer of Claim 17 wherein the plurality of data bar spaces is followed by a full barless space to provide time for initializing to read the next bar code means format.

19. The synthesizer of Claim 17 wherein the bar code means format comprises four data bar spaces.

20. The synthesizer of Claims 13, 14, 15, 16, 17, 18 or 19 wherein the bar code means comprises transparent ink, responsive to infrared light.

21. A document having a bar code associated with a printed text, adapted to be read by a bar code reader, comprising:

(a) a substrate having text printed thereon; and

(b) bar code means positioned proximate the printed text and comprising a format of bar spaces including a timing space to permit the bar code reader to sample the bar spaces approximately at their respective midpoints to provide parameter encoding, coded signals.

22. The document of Claim 21 wherein the coded signals comprise allophonic code.

23. The document of Claim 21 wherein the bar code means format further comprises a barless space adjacent the timing bar, followed by a plurality of data bar spaces, the barless space dimensioned to cause the bar code reader to sample at the approximate midpoint of the following bar code spaces.

24. The document of Claim 23 wherein the plurality of data bar spaces is followed by a full barless space to provide time for initializing to read the next bar code means format.

25. The document of Claim 24 wherein the barless space is one half the width of the bar spaces.

26. A document having machine readable and human recognizable manifestations, comprising:

(a) text printed on the document; and

(b) transparent code representative of the printed text affixed to the document.

27. The document as in Claim 26, wherein the transparent code is positioned directly above the printed text.

28.   The document as in Claim 26, wherein the transparent code is positioned directly below the printed text.

29.   The document as in Claim 26, wherein the transparent code is positioned in the space between the printed text.

30.   The document as in Claims 26, 27, 28, or 29, wherein the transparent code comprises an IR absorbent dye.

31.   A method of storing code representing printed text by printing the code with transparent ink adjacent the printed text.

*Fig.1*

Fig. 2

- DEAD TIME
- DATA BAR $\overline{\overline{=}}$ 4
- DATA BAR $\overline{\overline{=}}$ 3
- DATA BAR $\overline{\overline{=}}$ 2
- DATA BAR $\overline{\overline{=}}$ 1
- ADJUSTMENT SPACE
- SYNC. BAR

0059318

Allophone code description

| Allophone | | Description |
|---|---|---|

| 1 | AE1 | as in ".A.DDITION" |
| 2 | AE1N | as in ".A.NNUITY" |
| 3 | AE2 | as in "HAT" |
| 4 | AE3 | as in "HAD" |
| 5 | AH1 | as in "DELT.A." |
| 6 | AH1N | as in ".O.N TIME" |
| 7 | AH2 | as in "HOT" |
| 8 | AH3 | as in "ODD" |
| 9 | AI2 | as in "HEIGHT" |
| 10 | AI3 | as in "HIDE" |
| 11 | AR2 | as in "CART" |
| 12 | AR3 | as in "CARD" |
| 13 | AU2 | as in "HOUSE" |
| 14 | AU3 | as in "LOUD" |
| 15 | AW1 | as in ".AU.TONOMY" |
| 16 | AW1N | as in "AN.O.NIMITY" |
| 17 | AW2 | as in "SOUGHT" |
| 18 | AW3 | as in "SAW" |
| 19 | E1 | as in ".E.LIMINATE" |
| 20 | E1N | as in ".E.NOUGH" |
| 21 | E2 | as in "HEAT" |
| 22 | E3 | as in "SEED" |
| 23 | EELL | as in "HEEL" |
| 24 | EER2 | as in "PIERCE" |
| 25 | EER3 | as in "HEAR" |
| 26 | EH1 | as in "CONT.E.XT" |
| 27 | EH1N | as in "ANCI.E.NT" |
| 28 | EH2 | as in "SET" |
| 29 | EH3 | as in "SAID" |
| 30 | EHR2 | as in "TH.ER.APY" |
| 31 | EHR3 | as in "THERE" |
| 32 | EI2 | as in "TAKE" |
| 33 | EI3 | as in "DAY" |
| 34 | ER1 | as in "SEEK.ER" |
| 35 | ER1N | as in "WEST.ER.N" |
| 36 | ER2 | as in "HURT" |
| 37 | ER3 | as in "HEARD" |
| 38 | I1 | as in "SYNTH.E.S.I.S" |
| 39 | I1N | as in ".I.NANE" |

*Fig. 3A*

| 40 | I2 | as in ".I.SSUE" |
| 41 | I3 | as in "HID" |
| 42 | ILL | as in "HILL" |
| 43 | ING2 | as in "THINK" |
| 44 | O1 | as in "RATI.O." |
| 45 | O1N | as in "D.O.NATION" |
| 46 | OI2 | as in "CHOICE" |
| 47 | OI3 | as in "BOY" |
| 48 | OO1 | as in "T.OO.K ON" |
| 49 | OO2 | as in "COOK" |
| 50 | OO3 | as in "COULD" |
| 51 | OOR2 | as in "POORLY" |
| 52 | OOR3 | as in "POOR" |
| 53 | OR2 | as in "HORSE" |
| 54 | OR3 | as in "CORE" |
| 55 | OW2 | as in "BOAT" |
| 56 | OW3 | as in "LOW" |
| 57 | U1 | as in "ANN.U.AL" |
| 58 | U1N | as in ".U.NIQUE" |
| 59 | U2 | as in "SHOOT" |
| 60 | U3 | as in "SHOE" |
| 61 | UH1 | as in ".A.BOVE" |
| 62 | UH1M | as in "INSTR.U.MENTS" |
| 63 | UH1N | as in ".U.NERNEATH" |
| 64 | UH2 | as in "HUT" |
| 65 | ULL | as in "SK.U LL." |
| 66 | UHL | as in "P.ULL." |
| 67 | UH3 | as in "MUD" |
| 68 | UU2 | as in "BOOT" |
| 69 | UU3 | as in "MOON" |
| 70 | Y1 | as in "ROS.E.S" |
| 71 | Y1N | as in "BASEM.E.NT" |
| 72 | Y2 | as in "FUNN.Y." |
| 73 | LL | as in "AWF.UL.","WE.LL." |
| 74 | B | as in "BAD" |
| 75 | BB | as in "DAB" |
| 76 | D | as in "DIG" |
| 77 | DD | as in "BID" |
| 78 | G1 | as in "GIVE" |
| 79 | G2 | as in "GO" |
| 80 | GG | as in "BAG" |
| 81 | K2 | as in "SKATE" |
| 82 | KH | as in "CASE" |
| 83 | KH- | as in "MAKE" |
| 84 | KH1 | as in "KEY" |
| 85 | KH2 | as in "COUGH" |
| 86 | P | as in "SPACE" |
| 87 | PH | as in "PIE" |
| 88 | PH- | as in "NAP" |
| 89 | T | as in "STAKE" |
| 90 | TH | as in "TIE" |
| 91 | TH- | as in "LATE" |
| 92 | CH | as in "CHURCH" |
| 93 | F | as in "FAT" |
| 94 | FF | as in "LAUGH" |

*Fig. 3B*

```
95    HI     as in "HIT"
96    HO     as in "HOME"
97    HUH    as in "HUT"
98    J      as in "JUG"
99    JJ     as in "BUDGE"
100   L      as in "LIKE"
101   L-     as in "BOWL"
102   M      as in "MAY"
103   MM     as in "HUM"
104   N      as in "NICE"
105   NN     as in "SANE"
106   NG1    as in "THINK"
107   NG2    as in "THING"
108   R      as in "REAL"
109   S      as in "SEEM"
110   SS     as in "MISS"
111   SH     as in "SHINE"
112   SH-    as in "WASH"
113   THF    as in "THING"
114   THF-   as in "WITH"
115   THV    as in "THIS"
116   THV-   as in "CLOTHE"
117   V      as in "VINE"
118   VV     as in "LIVE"
119   W      as in "WITCH"
120   WH     as in "WHICH"
121   Y      as in "YOU"
122   Z      as in "ZOO"
123   ZZ     as in "DOES"
124   ZH     as in "AZURE"
125   ZH-    as in "BEIGE"
126   Pause (short pause)
127   Pause (long pause)
```

*Fig. 3C*

MSB     1 BIT                 VOICED FRAME         LSB

1 BIT | 4 BITS | | 5 BITS | 5 BITS | 5 BITS | 4 BITS | 4 BITS | 4 BITS | 4 BITS | 4 BITS | 3 BITS | 3 BITS | 3 BITS

UNVOICED FRAME

REPEAT FRAME

ZERO ENERGY FRAME OR ENERGY = 15 FRAME

EOA BIT   ENERGY   REPEAT BIT   PITCH   K1   K2   K3   K4   K5   K6   K7   K8   K9   K10

*Fig. 4*

0059318

# Fig. 5

| I | I | I | I | I | 4 BITS | 5 BITS | 5 BITS | 4 BITS | 4 BITS | 4 BITS | 4 BITS | 4 BITS | 3 BITS | 3 BITS | 3 BITS |

ENERGY — K1   K2   K3   K4   K5   K6   K7   K8   K9   K10

F5
F4
F3
F2
F1

| F3 | F4 | | |
|----|----|----|
| 0 | 0 | = 4 BITS/FRAME (E=0 OR E=15) |
| 0 | 1 | = 9 BITS/FRAME (REPEAT K'S) |
| 1 | 0 | = 27 BITS/FRAME (UNV. FRAME) |
| 1 | 1 | = 48 BITS/FRAME (VD FRAME) |

| F1 | F2 | |
|----|----|----|
| 0 | 0 | = VOWEL |
| 0 | 1 | = VD CONSONANT |
| 1 | 0 | = SONORANT |

| F5 | |
|----|----|
| 0 | = NOT LAST FRAME |
| 1 | = LAST FRAME OF ALLOPHONE |

*Fig. 6A*

0059318

Fig. 6B

*Fig. 7A*

START

READ AN
ALLOPHONE
ADDRESS

READ NEXT
FRAME

3

READ A FRAME OF
ALLOPHONE SPEECH
DATA

~31

JOINS FIG. 7B

Fig. 7B

JOINS FIG. 7A — 31

FIRST FRAME OF THE ALLOPHONE ?

NO → DECODE $F_3 F_4 F_5$

YES → DECODE $F_1$ $F_2$ $F_3$ $F_4$ $F_5$

$F_3 F_4 = 00$ ?

YES → $F_5 = 1$ ?

YES → LAST ALLOPHONE

YES → END

NO → $\begin{cases} E = 0 \\ F_5 = 1 \end{cases}$ TO 286 — NEXT ALLOPHONE → 2

$F_5 = 1$ ? NO → SEND E = 0 TO 286 — NEXT FRAME → 3

$F_3 F_4 = 00$ ? NO → $F_3 F_4 = 01$

YES

NO

32 — 33 —

JOINS FIG. 7C

10/23

0059318

③ 3

JOINS FIG. 7B

NO

32

33

YES

SEND E, P = 0
$K_1 - K_4$
TO 286

READ FIRST 4 BITS AS E. CREATE 5 BITS FOR P = 0 AND READ NEXT 4 K

YES

$F_3 F_4 = 10$ ?

NO

READ NEXT 4 BITS AS E. CREATE 5 BITS SPACE FOR PITCH AND R = 1

$F_3 F_4 = 11$

READ FIRST 4 BITS AS E, CREATE 5 BITS FOR P , AND READ NEXT 10 $K_i$

PITCH ADJUSTMENT

SET $P_i = 0$

YES (WHISPER)

BASE PITCH = 0 ?

NO

SEND E, $P_i = BP$
$K_i --- K10$
TO 286

$P_i = BP$

YES

DELTA PITCH = 0 ?

NO

34

NO

JOINS FIG. 7D

*Fig. 7C*

0059318

34

68

NO

$F_1 \; F_2 = 00$
VOWEL

YES

69

A PRIMARY
IN THE
PHRASE

YES

PRIMARY
STRESS
IN STRING

37

*Fig.7D*

NO

NO

NO

A
SECONDARY

YES

35

IT IS A
SECONDARY

IT IS AN
UNSTRESSED
VOWEL

FIRST
FRAME
?

YES

NO

# OF
SECONDARY
= # OF
SECONDARY
+1

BEFORE THE
PRIMARY
?

YES

NO

$P_i = BP$

38

39

41

12/23

0059318

Fig. 7E

94 — LAST VOWEL ? — YES

39

100 — S OR Q ? — Q

102 — FIRST FRAME — YES — NO

101 — PREVIOUS UNVOICED — YES — NO

35

95 — S OR Q ?

105 — $P_i = BP$

103 — $P_i = PV$

96 — IMMEDIATELY AFTER PRIMARY — YES

102 — FIRST FRAME — YES — NO

109 — FIRST FRAME — YES — NO

97 — $P_i = BP$

98 — $P_i = P_{i-1} + 2$

110 — $P_i = P_{i-1}$

41

111 — S OR Q ? — S — 43

112 — BEFORE PRIMARY ? — YES — NO — 44

JOINS FIG. 7I

39 — 45 — 46 — 47 — 48 — 49 — 50 — 51

JOINS FIG. 7F

13/23

0059318

*Fig. 7F*

A SONORANT OR VOICED CONSONANT

35

36

52

IMMEDIATE AFTER THE PRIMARY ? — NO → O OR S ?

Q → BEFORE PRIMARY ? — NO → (4)

YES → SONORANT OR VOICED CONSONOANT — SONORANT → FIRST FRAME ? — YES → $Pj = Pi-1-1$

NO → $Pi = Pi-1$

VOICED CONSONANT → $Pi = Pi-1$

S → AFTER LAST VOWEL — NO → SONO. OR VOICED CONSONANT — VOICED CONSONANT → $Pj = BP+1$

SONORANT → FIRST FRAME — $Pi = Pi-1+1$ IF $Pi \leq BP$

NO → $Pi = Pi-1$

YES → PRIMARY LAST VOWEL — YES → $Pi = Pi-1+1$ IF $Pi \leq BP+D$ OTHERWISE $Pi = BP+D$

NO

40

JOINS FIG. 7F

*Fig. 7G*

15/23

0059318

Fig.7H

0059318

*Fig. 7I*

**43**

OF SECONDARY = 1 ?  — YES — $P_i = P2$

FIRST FRAME — NO — $P_i = P_i - 1$

FIRST FRAME — YES — $P2 = P2 + 2$ IF $P2 \leq BP$; $PZ = BP$ — $P_i = P_2$

$P_2 = P_i$

**40**

**44**

FIRST FRAME ? — YES — $PV = PV-2$ IF $PV >$, $BP-D$ OTHERWISE $PY = BP-D$ — $P_i = PV+1$

NO — $P_i = P -1$

**39**

**45**

**46** $P_i = P_i-1$ IF $P_i; \geq BP-D$; OTHERWISE $P_i = BP-D$

**47** $P_i = P_i-1 +1$ IF $P_i \leq BP+2$; OTHERWISE $P_i = \bar{\ } BP+2$

**48** $PV = PV-2$ IF $PV \geq BP-D_3$ OTHERWISE. $PV = BP-D$ — $P_i = PV$

**49**

**50**

**51**

17/23

0059318

Fig. 8A

JOINS FIG. 8b

18/23

0059318

*Fig. 8B*

JOINS FIG 8a

JOINS FIG. 8C

*Fig. 8C*

```
              ┌──────────────┐
              │ PUSH TEMP ON │
              │  BOTTOM OF   │
              │   QUEUE 1    │
              └──────────────┘
```

```
   CNT              FIELD            ┌─────────┐            (F3)           ┌──────────┐
   REC      F       CNT        T     │ SET CNT │     T     CTL DATA   T    │ SET CTL  │
   FLAG SET ──────► = 0  ───────────►│ REC FLAG│──────────►           ────►│  FLAG    │
                                     └─────────┘                           └──────────┘
                        F                                                        │
                    ┌────────┐                                                   ▼
       T            │  GET   │                                            ┌──────────┐
                    │ FIELDS │                                            │ CNT REC 1│
                    └────────┘       ┌────────┐                          │ FLAG ← 1 │
                                     │ CHECK  │                          └──────────┘
   PHRASE      T                     │ SUM ←  │
   FLAG SET ──────────────────────► │ TEMP   │                            (F0)        ┌──────────┐
                                     └────────┘                           WORD    T   │ SET WORD │
       F                                 │                                       ────►│  FLAG    │
                                         ▼                                            └──────────┘
                                     ┌────────┐                               F
                                     │ FLD CNT│                           ┌──────────┐
                                     │  ← 3   │                           │   SET    │
                                     └────────┘                           │  PHRASE  │
                                         │                                │   FLAG   │
                                         ▼                                └──────────┘
                                     ┌──────────┐
                                     │ REMOVE   │
                                     │ CHECKSUM │
                                     │FROM QUEUE│
                                     └──────────┘
```

Fig. 8D

JOINS FIG. 8c

*Fig. 8E*

CNT REC 1 FLAG SET

WORD FLAG SET

FIELD CNT ← TEMP.

GET FLDS

CHECK SUM ← TEMP

FIELD CNT ← (TEMP + 1) X 2

CHECKSUM V ← CHECKSUM V + TEMP.

REMOVE CHECKSUM FROM QUEUE 1

COUNT REC 1 FLAG ← 0

RESET COUNT REC FLAG

FIELD CNT ← FIELD CNT - 1

NEXT REC

FIELD CNT = 0

22/23

0059318

**THE COW JUMPED OVER**

*Fig. 9*

*Fig. 10*

IR SENSOR — IR EMITTER

CODE BARS CONTAINING IR ABSORBANT DYE

*Fig. 11*

IR SENSOR — IR EMITTER

CODE BARS CONTAINING IR ABSORBANT DYE

0059318

European Patent
Office

**EUROPEAN SEARCH REPORT**

Application number

EP 82 10 0580

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | US-A-3 735 350 (J.H.LEMELSON)<br><br>*Figures 1-4; column 4, lines 1-64; column 6, line 45 - column 7, line 12; column 7, line 36; column 8, line 54* | 1-7,12 -15,21 -22,26 -29,31 | G 09 B 5/06<br>G 10 L 1/00<br>G 06 K 19/08 |
| Y | IBM TECHNICAL DISCLOSURE BULLETIN, vol. 20, no. 6, November 1977, pages 2421-2422, New York (USA); J.T.POWERS, Jr.: "Text publishing and reading system for the handicapped". *The whole document* | 1-6,13 -14,21 -22 | |
| Y | FR-A-2 458 869 (N.V.PHILIPS GLOEILAMPEN FABRIEKEN)<br><br>*Figures 1,3,6; page 9, line 17 - page 12, line 34; page 15, line 32 - page 16, line 17; page 23, line 34 - page 24, line 28* | 1-7,13 -15,21 -22 | TECHNICAL FIELDS SEARCHED (Int. Cl. ³)<br><br>G 09 B<br>G 10 L<br>G 06 K |
| Y | RESEARCH DISCLOSURE, no. 160, August 1977, page 60, Vants Hants (GB); "Printed documents and the detection of marking thereon". *The whole article* | 1,12, 20,30 | |

The present search report has been drawn up for all claims

| Place of search | Date of completion of the search | Examiner |
|---|---|---|
| THE HAGUE | 28-05-1982 | CARDON A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

0059318

Application number

# EUROPEAN SEARCH REPORT

European Patent Office

EP 82 10 0580

| | DOCUMENTS CONSIDERED TO BE RELEVANT | Page 2 | |
|---|---|---|---|

| Category | Citation of document with indication, where appropriate, of relevant passages | Relevant to claim | CLASSIFICATION OF THE APPLICATION (Int. Cl. 3) |
|---|---|---|---|
| Y | US-A-3 760 161 (W.E.LOHNE et al.) <br> *Figures 2,3; column 4, lines 14-65* | 1-3,26 ,28,29 | |
| Y | FR-A-2 452 149 (BERTIN & CIE) <br><br> *Figures; claims* | 1-3,5, 13,21, 28,29 | |
| Y | US-A-3 731 064 (R.M.BERLER et al.) <br><br><br> *Figures 3,4; column 6, line 51 - column 8, line 46* | 7,8,9, 10,15, 16,17, 18,23, 24,25 | |
| | ----- | | TECHNICAL FIELDS SEARCHED (Int. Cl. 3) |

| The present search report has been drawn up for all claims | | |
|---|---|---|
| Place of search <br> THE HAGUE | Date of completion of the search <br> 28-05-1982 | Examiner <br> CARDON A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82